# EUROPÄISCHE PATENTSCHRIFT

(11) **EP 2 892 118 B1**
(45) Veröffentlichungstag und Bekanntmachung des Hinweises auf die Patenterteilung: **04.12.2019**
(21) Anmeldenummer: 14160637.6
(22) Anmeldetag: 19.03.2014
(51) Int. Cl.: H02G 3/08, H02G 3/16

(54) **Abzweigkasten mit Klemme**
Junction box with terminal
Boîte de dérivation avec borne

(30) Priorität: 23.12.2013 EP 13199405
(43) Veröffentlichungstag der Anmeldung: 08.07.2015
(73) Patentinhaber: Gustav Hensel GmbH & Co. KG, 57368 Lennestadt (DE)
(72) Erfinder: Deichmann, Karl-Heinz, 57368 Lennestadt (DE); Baetz, Marcus, 57399 Kirchhundem (DE)
(74) Vertreter: Rausch Wanischeck-Bergmann Brinkmann

(56) Entgegenhaltungen:
- EP-A2- 1 646 118
- DE-A1- 3 010 956
- DE-C- 731 916
- GB-A- 2 410 378

## Beschreibung

Die Erfindung betrifft einen Abzweigkasten für die Installation von Elektrokabeln, mit einem Gehäuse und einer Klemme zum Anschluss von Elektroleitungen.

Derartige Abzweigkästen sind aus dem Stand der Technik gut bekannt. Es handelt sich hierbei um Vorrichtungen zur Verteilung von elektrischen Signalen und elektrischer Leistung. Beispielsweise kann ein erstes Elektrokabel als Zuleitung in den Abzweigkasten geführt werden, dort die einzelnen Elektroleitungen des Elektrokabels mit einer im Abzweigkasten vorgesehenen Klemme verbunden werden, und anschließend zwei aus dem Abzweigkasten herausgeführte Elektrokabel zur Verteilung des Signals des eingehenden Elektrokabels ebenfalls mit der Klemme verbunden werden. Das Gehäuse des Abzweigkastens kann verschlossen werden, so dass insgesamt eine geschützte Installation erreicht wird.

Die aus dem Stand der Technik bekannten Abzweigkästen weisen Klemmen auf, welche üblicherweise am Boden des Gehäuses befestigt sind. Die Klemmen weisen üblicherweise einander gegenüberliegende Anschlüsse auf, so dass die Klemmen von zwei Seiten aus zugänglich sein müssen. Aus diesem Grund sind die Klemmen üblicherweise in etwa mittig im Gehäuse angeordnet.

Aus der DE 195 08 150 C2 ist eine Verbindungsdose bekannt. Diese weist im Bereich der Ecken eines quadratischen Gehäuses Dome auf, an welchen eine Klemmen aufweisende Klemmleiste angebracht werden kann. Die die Klemmen aufweisende Klemmleiste ist ein einstückiges, nur als Einheit handhabbares Bauteil. Die Klemmleiste wird unmittelbar an den Domen des Gehäuses angebracht. Anschließen muss die Klemmleiste durch ein Verbindungselement, beispielsweise eine Schraube, am Gehäuse fixiert werden.

Ähnliche Ausgestaltungen sind auch aus der EP 1 646 118 A2 und der DE 30 10 956 A1 bekannt. Auch dort sind Klemmen in Form einer Klemmleiste oder individuell unmittelbar mit dem Gehäuse verbunden. Die Klemmen und/oder die Klemmleiste wird durch ein Verbindungselement, beispielsweise einen U-förmigen Metallbügel am Gehäuse fixiert.

Wenngleich sich die aus dem Stand der Technik bekannten Abzweigkästen bewährt haben, besteht dennoch Verbesserungsbedarf. Um die Montage und Installation noch einfacher zu gestalten, ist es die **Aufgabe** der vorliegenden Erfindung, die Handhabung eines gattungsgemäßen Abzweigkastens zu verbessern.

Zur **Lösung** schlägt die Erfindung einen Abzweigkasten gemäß Patentanspruch 1 vor.

Erfindungsgemäß kommt es zunächst darauf an, dass die Befestigungsleiste und/oder die Klemme nicht mittig oder zentral im Gehäuse angeordnet sind, sondern im Bereich einer Seitenwand des Gehäuses. Die Befestigungsleiste und/oder die Klemme sind im erfindungsgemäßen Sinn an einer Seitenwand des Gehäuses angeordnet, wenn sie mit Bezug auf die Grundfläche des Bodens des Gehäuses nicht mittig auf dem Boden sitzen, sondern im Bereich beziehungsweise nahe einer Seitenwand. Der Abstand der Klemme und/oder der Befestigungsleiste zur Seitenwand des Gehäuses beträgt mit Bezug auf die lichte Weite zwischen zwei einander gegenüberliegenden Seitenwänden des Gehäuses höchsten 20%, insbesondere höchstens 10%, bevorzugt höchstens 5% dieser lichten Weite. Mit anderen Worten ist von der Erfindung sowohl ein unmittelbares Anliegen der Klemme und/oder der Befestigungsleiste an der Seitenwand des Gehäuses als auch eine Anordnung an der Seitenwand unter Belassung eines kleinen Spalts zu verstehen.

Erfindungsgemäß ist die Klemme zudem unter Zwischenordnung einer Befestigungsleiste im Bereich einer Seitenwand des Gehäuses angeordnet. Es ist erfindungsgemäss vorgesehen, dass nicht die Klemme selbst unmittelbar mit dem Gehäuse verbunden ist, sondern nur die die Klemme aufnehmende Befestigungsleiste. Die Klemme kann dadurch freischwebend im Gehäuse montiert werden.

Die Befestigungsleiste dient als Klemmenaufnahme. Die Klemme kann lösbar an der Befestigungsleiste angeordnet werden. Lösbar meint eine zerstörungsfrei wieder aufzuhebende Verbindung. Die Klemme kann formschlüssig mit der Befestigungsleiste verbunden sein, beispielsweise durch eine Rastverbindung. Die Klemme kann so einfach in die Befestigungsleiste eingeschoben werden, wobei sie in der Endlage mit der Befestigungsleiste verrastet. Eine Trennung dieser Einheit aus Befestigungsleiste und Adapter kann durch eine entsprechende Betätigung der Rastverbindung durchgeführt werden.

Die Befestigungsleiste kann eine Vielzahl von Aufnahmen für Klemmen aufweisen. Eine Klemme kann dann wahlweiseweise in unterschiedlichen Positionen an der Befestigungsleiste angeordnet werden. An der Befestigungsleiste können wahlweise unterschiedliche Klemmenarten angeordnet werden. Die Klemmenart kann sich hinsichtlich der Größe, der Anzahl Pole und/oder dergleichen unterscheiden.

Die Befestigungsleiste kann sich über wenigstens 50%, insbesondere wenigstens 75%, bevorzugt 100% der gesamten Breite einer Seitenwand des Gehäuses erstrecken. Die Befestigungsleiste kann parallel zur Seitenwand des Gehäuses verlaufen. Die Befestigungsleiste kann von den, insbesondere parallelen, Seitenwänden und/oder dem Boden des Gehäuses beabstandet sein.

Durch die erfindungsgemäße Anordnung der Befestigungsleiste und der Klemme wird zum einen erreicht, dass nahezu der gesamte Innenraum des Gehäuses zur Installation, insbesondere zum Einführen von Elektroleitungen in die Klemme zur Verfügung steht. Bei der aus dem Stand der Technik bekannten mittigen oder zentralen Anordnung der Klemme im Gehäuse steht jeweils in etwa nur der halbe Innenraum des Gehäuses für ein derartiges Einführen von Elektroleitungen zur Verfügung. Die Folge ist, dass ein erfindungsgemäßer Abzweigkasten bei ansonsten vergleichbaren Eigenschaften hinsichtlich der Größe des Gehäuses kleiner als die aus dem Stand der Technik bekannten Abzweigkästen ausgebildet werden kann. Dem Grunde nach kann ein erfindungsgemäßer Abzweigkasten ein um die Hälfte verkleinertes Gehäuse aufweisen, da der Innenraum im Gehäuse, der für den Anschluss der Elektroleitungen an der Klemme zur Verfügung steht, in etwa derselbe bleibt, wie bei einer mittig im Gehäuse angeordneten Klemme.

Durch die erfindungsgemäße Anordnung der Klemme unter Zwischenordnung der Befestigungsleiste wird zudem erreicht, dass die Montage der Klemme und somit des Abzweigkastens insgesamt im Vergleich mit dem Stand der Technik deutlich vereinfacht werden kann. Dies liegt darin begründet, dass das Gehäuse ohne darin angeordnete Klemme am Einbauort vormontiert werden kann. Die Klemme hingegen ist immer noch frei handhabbar. Beim Anschließen von Elektroleitungen müssen diese nicht in eine lagefest angeordnete Klemme eingeführt werden, sondern es können vielmehr die Klemme einerseits und die Elektroleitungen andererseits frei zueinander bewegt werden. Daher können Leitungen besonders einfach und komfortabel mit der Klemme verbunden werden. Sofern die Klemme fertig mit Leitungen bestückt ist, kann sie in einfacher Weise mit der Befestigungsleiste verbunden werden. Hierzu können die Klemme und die Befestigungsleiste Verbindungsmittel aufweisen, welche in dieser Form nicht für die Verbindung Klemme-Gehäuse oder Befestigungsleiste -Gehäuse möglich wären. Es kann sich beispielsweise um eine Rastverbindung und/oder dergleichen handeln. Die Klemme muss dann lediglich an der Befestigungsleiste eingeklipst werden. Die Klemme ist insbesondere werkzeugfrei mit der Befestigungsleiste verbindbar ausgebildet.

Im Unterschied zum Stand der Technik, beispielsweise in Form der DE 195 08 150 C2, kann die Position der einzelnen Klemmen im Gehäuse frei gewählt werden im Rahmen der von der Befestigungsleiste bereitgestellten Aufnahmepositionen. Zudem muss nicht eine einstückige, die Klemmen fest tragende Klemmleiste direkt mit dem Gehäuse verschraubt werden. Die einzelnen Klemmen können vielmehr sehr einfach an der Befestigungsleiste eingeklipst werden oder dergleichen. Hinzu kommt, dass bei einem Tausch der zum Einsatz kommenden Klemmenart gemäß der DE 195 08 150 C2 die gesamte Klemmleiste ausgetauscht werden muss, was ein Lösen der Schraubverbindungen und dergleichen erforderlich macht. Gemäß der Erfindung reicht es hingegen aus, einzelne Klemmen von der Befestigungsleiste zu lösen und gegen eine Klemme anderer Art zu tauschen. Dies kann völlig werkzeugfrei erfolgen. Insgesamt ist also bei einem erfindungsgemäßen Abzweigkasten die Handhabung deutlich verbessert.

Gemäß einer vorteilhaften Weiterbildung der Erfindung ist die Befestigungsleiste und/oder die Klemme von einem Boden des Gehäuses beabstandet angeordnet. Mit Bezug auf die Senkrechte des Bodens sitzt die Befestigungsleiste und/oder die Klemme also erhöht. Zwischen der Klemme und/oder der Befestigungsleiste einerseits und dem Boden des Gehäuses andererseits verbleibt ein Spalt. Durch diese Weiterbildung verbleibt zwischen der Klemme und/oder der Befestigungsleiste einerseits und dem Boden andererseits ein im Vergleich zum Stand der Technik größerer installationsraum, der von einem Verwender genutzt werden kann, Elektroleitungen an der Klemme anzuschließen. Zudem können Elektroleitungen unter der Klemme und/oder der Befestigungsleiste hindurchgeführt werden. Zudem ist denkbar, dass die Klemme Anschlüsse für Elektroleitungen aufweist, welche im montierten Zustand in Richtung des Bodens des Gehäuses gerichtet sind. Die Einführrichtung für diese Anschlüsse erstreckt sich mit anderen Worten rechtwinklig zum Boden des Gehäuses. Insgesamt wird somit die Montage des Abzweigkastens vereinfacht.

Die Befestigungsleiste kann im Bereich der Ecken des Gehäuses mit demselben verbunden sein. Die Befestigungsleiste ist insbesondere durch eine Eckbefestigung an der Seitenwand des Gehäuses angeordnet. Eckbefestigung meint, dass die Verbindung zwischen der Befestigungsleiste und der Seitenwand des Gehäuses im Bereich des Schnittpunkts der Seitenwände des Gehäuses erfolgt.

Gemäß einer vorteilhaften Weiterbildung der Erfindung ist eine Vielzahl von unterschiedlichen Klemmen vorgesehen, welche nach dem Baukastenprinzip mit der Befestigungsleiste kombinierbar ausgebildet sind. Es ist ein System vorgesehen, bei welchem viele hinsichtlich ihrer Eigenschaften unterschiedliche Klemmen vorgesehen sind, welche aber allesamt ein gleich ausgebildetes Verbindungsmittel zur Anordnung an der Befestigungsleiste aufweisen. Die Befestigungsleiste kann mehrere, als Gegenstück ausgebildete Verbindungsmittel aufweisen. Diese können über die Länge der Befestigungsleiste verteilt sein. Somit können unterschiedlichste Klemmenarten an unterschiedlichsten Positionen an der Befestigungsleiste angeordnet werden. Dadurch wir ein in der Handhabung besonders flexibler Abzweigkasten geschaffen.

Erfindungsgemäß ist die Befestigungsleiste als lösbar im Gehäuse angeordneter Adapter ausgebildet. Gemäß dieser Ausgestaltung ist der Adapter lösbar im Gehäuse angeordnet. Lösbar meint, dass ein im Gehäuse angeordneter Adapter zerstörungsfrei wieder vom Gehäuse getrennt werden kann. Ein einmal an einer Seitenwand des Gehäuses angeordneter Adapter kann also zerstörungsfrei wieder gelöst werden und anschließend beispielsweise an einer anderen Seitenwand des Gehäuses angeordnet werden. Hierzu sind entsprechende reversibel verbindbare Befestigungsmittel vorgesehen. Auf diese Weise kann ein bereits montierter Abzweigkasten für eine alternative Verwendung besonders einfach umgerüstet werden.

Hinzu kommt, dass die Herstellung der Befestigungsleiste vereinfacht werden kann, wenn sie als als vom Gehäuse unabhängiger Adapter ausgebildet ist. Insbesondere können dadurch am Adapter Verbindungsmittel ausgebildet werden, welche in dieser Form aus fertigungstechnischen Gründen nicht an einem gehäusefesten Teil ausgebildet werden fertigungstechnischen Gründen nicht an einem gehäusefesten Teil ausgebildet werden können, zumindest nicht wirtschaftlich sinnvoll.

Der Adapter weist zwei Verbindungsmittel auf. Ein erstes Verbindungsmittel dient der Verbindung des Adapters mit dem Gehäuse. Das zweite Verbindungsmittel dient der Verbindung des Adapters mit der Klemme. Durch Verwendung des Adapters kann beispielsweise eine handelsübliche Klemme mit den im Besonderen ausgebildeten Befestigungsmitteln innerhalb des erfindungsgemäßen Gehäuses verbunden werden. Dies erleichtert insgesamt die Handhabung, da ein Verwender ihm bekannte Klemmen in einfacher Weise weiterverwenden kann. Er kann diese Klemmen durch Anordnung am Adapter vorkonfektionieren und anschließend die Einheit aus Klemme und Adapter mit dem Gehäuse verbinden. Es kann aber auch der Adapter im Gehäuse vorkonfektioniert werden. Die Klemme kann dann erst nachträglich mit dem Adapter verbunden werden. Die Handhabung wird dadurch noch flexibler.

Der Adapter kann mit dem Gehäuse formschlüssig verbindbar, insbesondere verschraubbar sein. Denkbar ist insbesondere ein Drehverschluss, beispielsweise nach der Art eines Bajonetts. Hierzu weist der Adapter ein drehbares Verbindungsmittel vor, welches in ein entsprechendes Verbindungsmittel am Gehäuse, insbesondere an der Seitenwand des Gehäuses, eingreifen kann. Hierdurch wird eine besonders sichere und dauerhafte Verbindung geschaffen.

Gemäß einer vorteilhaften Weiterbildung der Erfindung weist das Gehäuse eine Vielzahl von vorgegebenen Positionen für den Adapter auf, wobei der Adapter wahlweise an einer der Positionen anordenbar ist. Im Gehäuse sind mehrere hinsichtlich ihrer Anschlussmöglichkeit identisch ausgebildete Positionen vorgesehen, an denen der Adapter positioniert werden kann. Im Falle der vorstehend bereits erwähnten Eckbefestigung ist beispielsweise in jeder der vier Ecken eines viereckigen Gehäuses ein entsprechendes Verbindungsmittel vorgesehen, an welchem der Adapter angeordnet werden kann. Der Adapter kann auf diese Weise wahlweise an einer der vier Seitenwände des Gehäuses angeordnet werden. Von Vorteil ist, dass bei der Installation eines solchen Abzweigkastens nicht auf die Orientierung des Gehäuses geachtet werden muss. Es kann vielmehr in das bereits installierte Gehäuse der Adapter an der gewünschten Position eingebracht werden.

Gemäß einer vorteilhaften Weiterbildung der Erfindung weist die Klemme mehrere Pole auf, wobei jeder Pol wenigstens zwei Anschlüsse aufweist, wobei die Anschlüsse eines Pols eine gleiche Einschubrichtung aufweisen und an einer Vorderseite der Klemme rechtwinklig zur Einschubrichtung nebeneinander angeordnet sind. Diese Weiterbildung betrifft eine Klemme, welche einen Anschluss von Elektroleitungen ausschließlich von einer Seite her ermöglicht Dies steht im Gegensatz zu den bekannten Klemmen, welche Anschlüsse auf zwei einander gegenüber liegenden Seiten aufweisen. Hinzu kommt, dass die Klemme nicht nur einen Pol, sondern wenigstens zwei Pole aufweist. Dies bedeutet, dass nicht alle Anschlüsse dieser Klemme elektrisch leitend miteinander verbunden sind, sondern wenigstens zwei Gruppen von Anschlüssen elektrisch voneinander getrennt sind. Die Klemme gemäß dieser Weiterbildung weist also zumindest zwei elektrisch voneinander getrennte Pole auf, wobei jeder Pol jeweils wenigstens zwei elektrisch miteinander verbundene Anschlüsse aufweist. Anschluss meint in diesem Zusammenhang, dass es sich dabei um räumlich voneinander getrennte Einrichtungen handelt. Mit Anschluss ist nicht gemeint, dass lediglich zwei Leitungen nebeneinander in ein und dieselbe Öffnung der Klemme gesteckt werden. Es meint vielmehr, dass jeder Anschluss baulich von dem anderen getrennt ist. Die Einschubrichtung der Anschlüsse eines Pols ist jeweils gleich. Dies bedeutet, dass die Leitungen in die verschiedenen Anschlüsse jeweils in gleicher Richtung eingeführt werden. Diese Richtungen verlaufen insbesondere parallel zueinander. Es kann vorgesehen sein, dass in einen Anschluss mehrere Leitungen eingeführt werden. Es kann ergänzend oder alternativ vorgesehen sein, dass die Klemme bzw. die Anschlüsse Leitungen unterschiedlicher Eigenschaften aufnehmen können. Die Leitungen können sich hinsichtlich der Leitungsart, der Querschnittsgeometrie, der Querschnittsfläche, des Werkstoffs und/oder dergleichen unterscheiden.

Mit dieser Weiterbildung kann ein erfindungsgemäßer Abzweigkasten noch effektiver benutzt werden. Die Klemme gemäß dieser Weiterbildung weist auf der Rückseite, welche der Vorderseite mit den Anschlüssen gegenüberliegt, keinerlei Funktionselemente auf, welche bei Verwendung des Abzweigkastens zugänglich sein müssten. Eine Klemme gemäß dieser Weiterbildung kann daher dem Grunde nach direkt an einer Seitenwand des Gehäuses anliegen. Alle Funktionen der Klemme sind von von der Rückseite abweichenden Seiten zugänglich.

Gemäß einer vorteilhaften Weiterbildung weist die Klemme jeweils zwischen zwei Polen eine Trennwand auf, welche entgegen der Einschubrichtung über die Vorderseite der Klemme heraussteht. Die Trennwand erstreckt sich insbesondere in Einschubrichtung, das heißt rechtwinklig zur Vorderseite. Die Trennwände bilden eine Art Begrenzung oder Einschubkanal für die mit den Anschlüssen zu verbindenden Elektroleitungen. Ein Abrutschen mit einer Elektroleitung in Richtung eines "falschen" Pols kann auf diese Weise wirksam verhindert werden. Hinzu kommt, dass ein Verwender durch diese Strukturierung der Klemme mit den Trennwänden einfach erkennen kann, über welche Anzahl Pole und welche Anzahl Anschlüsse pro Pol die jeweilige Klemme verfügt.

Gemäß einer vorteilhaften Weiterbildung der Erfindung ist die Klemme als ein als Einheit handhabbares Bauteil ausgebildet. Die Klemme ist einstückig ausgebildet. Bei der Klemme handelt es sich insbesondere nicht um eine Zusammenfügung mehrerer Einzelklemmen, sondern um ein fertig konfektioniertes Bauteil.

Details der Erfindung werden im Folgenden anhand der in den Figuren gezeigten Ausführungsbespiele beschrieben. Es zeigen:
- Fig. 1a: eine perspektivische Darstellung eines Abzweigkastens gemäß der Erfindung mit geschlossenem Gehäuse;
- Fig. 1b: eine perspektivische Darstellung des Deckels des Abzweigkastens gemäß Fig. 1a;
- Fig. 2: eine Seitenansicht des Abzweigkastens gemäß Fig. 1;
- Fig. 3: eine Draufsicht auf den Abzweigkasten gemäß Fig. 1;
- Fig. 4: eine perspektivische Darstellung des Unterteils eines Abzweigkastens mit einer Klemme;
- Fig. 5: die Darstellung gemäß Fig. 4, wobei ein Zwischenzustand bei der Montage gezeigt ist;
- Fig. 6: die Darstellung gemäß Fig. 4, wobei ein weiterer Zwischenzustand bei der Montage gezeigt ist; und
- Fig. 7: Ausführungsformen einer Klemme und eines Adapters gemäß der Erfindung.

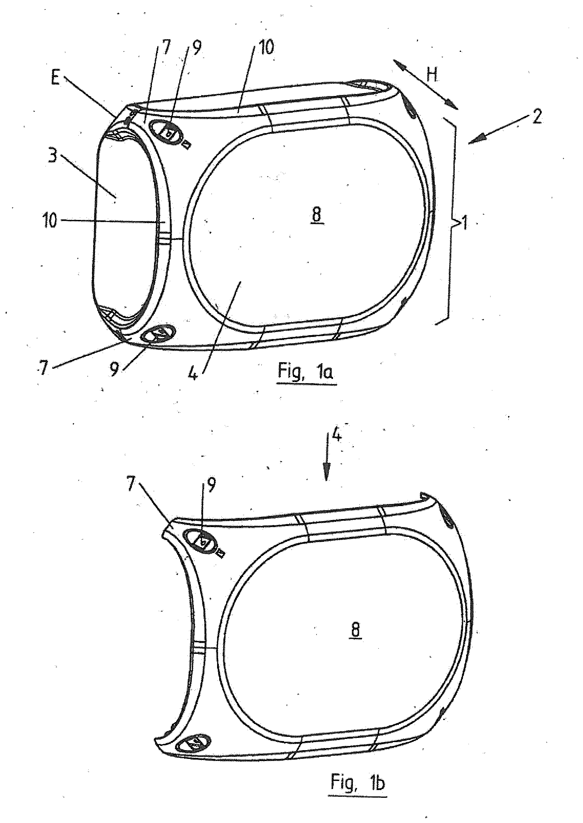

Fig. 1a zeigt eine Ausführungsform eines Abzweigkastens 1 gemäß der Erfindung. Darstellt ist eine perspektivische Draufsicht auf ein Gehäuse 2 des Abzweigkastens 1. Das Gehäuse 2 ist geschlossen. Dies bedeutet, dass ein Deckel 4 auf einem Unterteil 3 angeordnet ist.

Das Gehäuse 2 weist eine Höhe H auf. Die Höhe H erstreckt sich rechtwinklig zum Boden 5 des Unterteils 3 bzw. zur Oberfläche 8 des Deckels 4. Das Gehäuse weist zudem vier Ecken E auf.

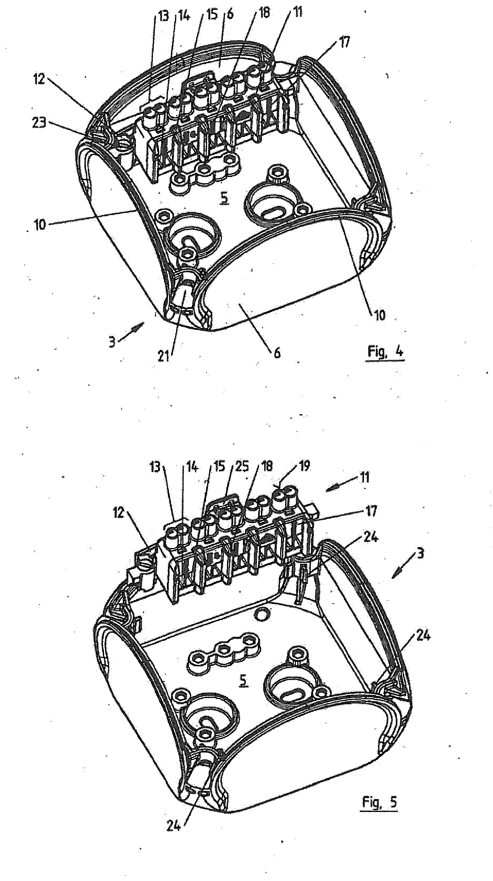

Der Deckel 4 ist in perspektivischer Darstellung in Fig. 1b dargestellt. Das Unterteil 3 ist in den Figuren 4 bis 6 dargestellt. Es ist für das Gehäuse 2 charakteristisch, dass sowohl das Unterteil 3 als auch der Deckel 4 eine teilweise gekrümmt ausgebildete Außenoberfläche aufweisen. Der Deckel 4 weist eine Oberseite 8 auf. Diese Oberseite 8 ist flach ausgebildet. Die Oberseite 8 ist oval, insbesondere eiförmig begrenzt.

An die Oberfläche 8 schließt sich eine gekrümmte Außenoberfläche an. Diese verbindet vier Beine 7 mit der flachen Oberseite 8. Die Oberfläche 8 des Deckels 4 geht zu allen Seiten hin in einen gekrümmten Oberflächenbereich über. Die Beine 7 sind im Bereich der Ecken E ausgebildet.

Die Krümmung der Außenoberfläche verläuft von der flachen Oberseite 8 ausgehend in Richtung der Beine 7, insbesondere in Richtung an den Beinen 7 angeordneter Befestigungsmittel 9. Die Befestigungsmittel 9 weisen eine Richtung auf, in welche das Befestigungsmittel 9 verdreht werden, geschoben werden oder dergleichen betätigt werden kann. Die Krümmung der Außenoberfläche geht soweit, dass eine gedachte Tangente an der Außenoberfläche im Bereich des Beins 7 einen Verlauf parallel zur Betätigungsrichtung des Befestigungsmittels 9 erreicht.

Die Krümmung der Außenoberfläche führt dazu, dass im Bereich der Ecken E die Höhe H des Gehäuses 2 geringer ist als in sämtlichen übrigen Bereichen des Gehäuses 2.

Nebeneinander angeordnete Beine 7 sind jeweils durch eine konkave Ausnehmung im Deckel 4 miteinander verbunden. Diese konkaven Ausnehmungen dienen der Aufnahme entsprechend konvexer Seitenwände 6 des Unterteils 3. Die Beine 7 des Deckels 4 weisen jeweils Befestigungsmittel 9 auf. Die Befestigungsmittel 9 dienen der Verbindung mit dem Unterteil 3. Bei dem Befestigungsmittel 9 kann es sich beispielsweise um Rasthaken, Schrauben oder dergleichen handeln.

Das Unterteil 3 weist einen Boden 5 sowie vier Seitenwände 6 auf. Die Seitenwände 6 erstrecken sich vom Boden 5 weg. An dem dem Boden 5 gegenüberliegenden Ende sind die Seitenwände 6 konvex gekrümmt. Diese konvexe Krümmung der Seitenwände 6 korrespondiert zu der konkaven Krümmung der Ausnehmung im Deckel 4.

Die Seitenwände 6 des Unterteils 3 weisen jeweils einen Kragen 10 auf. Der Kragen 10 dient als Auflager für den Deckel 4. Fig. 1a zeigt das Gehäuse 2 im geschlossenen Zustand. Die vier Beine 7 ragen in entsprechende Bereiche des Unterteils 3 hinein. Die konkaven Ausnehmungen des Deckels 4 schließen formbündig mit den konvex geformten Seitenwänden 6 des Unterteils 3 ab. Der Deckel 4 liegt auf den Kragen 10 der Seitenwände 6 des Unterteils 3 auf.

Dieser formbündige Verbund zwischen dem Unterteil 3 und dem Deckel 4 führt dazu, dass ein falscher Sitz des Deckels 4 leicht erfühlt werden kann. Es verbleibt dann ein deutlicher Spalt oder eine deutliche Stufe zwischen dem Deckel 4 einerseits und dem Unterteil 3 andererseits. Dieser ist leicht zu ertasten. Auf diese Weise kann der korrekte Zusammenbau des Gehäuses 2 auch bei schlechten Sichtverhältnissen, insbesondere bei Dunkelheit ohne weiteres überprüft werden.

Das Unterteil 3 weist ebenfalls eine ebenfalls oval geformte Außenoberfläche auf. Dies betrifft beispielsweise die Ecken, welche durch den Schnittpunkt zweier nebeneinanderliegender Seitenwände 6 und dem Boden 5 entstehen. Die Krümmung der Außenoberfläche des Unterteils 3 ist entsprechend der Krümmung der Außenoberfläche des Deckels 4 ausgebildet. Dadurch ergibt sich insgesamt eine homogene Anmutung des Gehäuses 2.

Im Unterteil 3 sind in den Eckbereichen Befestigungsmittel 21 vorgehen. Diese Befestigungsmittel 21 des Unterteils 3 korrespondieren zu den Befestigungsmitteln 9 des Deckels 4. Es handelt sich hierbei beispielsweise um Innengewinde, einen Hinterschnitt für Rasthaken oder dergleichen.

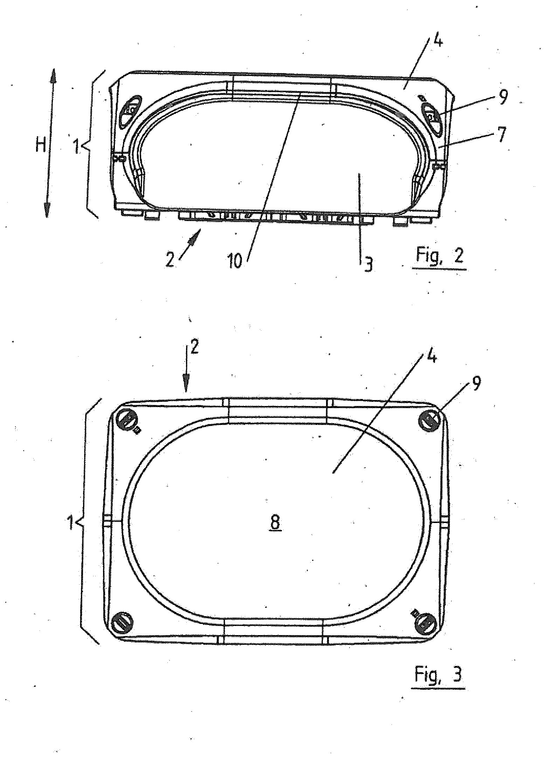

Die Figuren 2 und 3 zeigen das geschlossene Gehäuse 2 in einer Seitenansicht beziehungsweise einer Draufsicht.

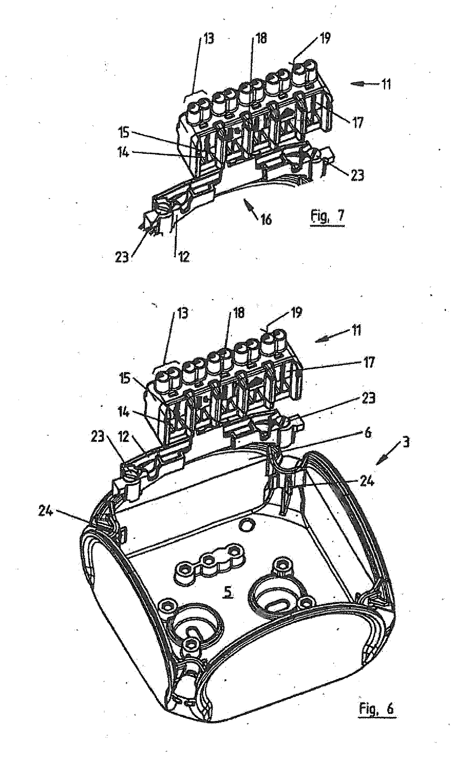

Die Figuren 4 bis 6 zeigen das Unterteil 3 des Abzweigkastens 1. In den Figuren sind verschiedene Zwischenzustände bei der Montage einer Klemme 11 dargestellt. Die Klemme 11 wird mittels eines Adapters 12 im Unterteil 3 angeordnet, Fig. 4 zeigt die fertig montierte Klemme 11. Fig. 5 zeigt die mit dem Adapter 12 verbundene Klemme 11, bevor oder nachdem die Einheit aus beiden Teilen mit dem Unterteil 3 verbunden wird. Fig. 6 zeigt einen Zustand, in welchem die Klemme 11, der Adapter 12 sowie das Unterteil 3 nicht miteinander verbunden sind. Der Adapter 12 könnte alternativ auch fest mit dem Gehäuse verbunden sein. Der Adapter 12 dient als Befestigungsleiste für die Klemme 11.

In das Unterteil 3 können Öffnungen eingebracht werden, durch welche Elektroleitungen von außen in den Abzweigkasten 1 hineingeführt werden können, Innerhalb des Abzweigkastens 1 können mehrere eingeführte Elektroleitungen miteinander verbunden werden. Zu diesem Zweck wird die Klemme 11 eingesetzt.

Die Klemme 11 bildet ein einstückiges Bauteil. Dieses Bauteil ist als Einheit handhabbar. Die Klemme 11 ist an einer der Seitenwände 6 des Unterteils 3 angeordnet. Die Klemme 11 ist hierzu mit dem Adapter 12 verbunden, welcher Adapter 12 wiederum an der Seitenwand 6 des Unterteils 3 angeordnet ist.

Zur Anordnung der Klemme 11 mit dem Adapter 12 sind an den Seitenwänden 6 Verbindungsmittel 24 vorgesehen. Diese sind insbesondere in Fig. 6 zu erkennen. Es handelt sich hierbei um Vorsprünge, welche von den Seitenwänden 6 vorstehen. Der Adapter 12 weist entsprechende Verbindungsmittel 23 auf, welche eine Öffnungs- und eine Schließstellung aufweisen. In der Öffnungsstellung kann der Adapter mit den Verbindungsmitteln 23 an den Verbindungsmitteln 24 der Seitenwände 6 vorbeigeführt werden. Anschließend können die Verbindungsmittel 23 in die Schließstellung überführt werden. Die Verbindungsmittel 23 des Adapters 12 hintergreifen dabei die Verbindungsmittel 24 der Seitenwände 6. Die Verbindungsmittel 24 stehen radial von einem gebogenen Abschnitt der Seitenwand 6 vor. Sie spannen einen Winkel von ungefähr 90° auf. Die Verbindungsmittel 24 spannen eine Art Schwalbenschwanz auf, auf welchen der Adapter 12 aufgeschoben werden kann. Der Adapter 12 ist dann formschlüssig an der Seitenwand 6 gehalten. Auf diese Weise kommt es zu einer Festlegung des Adapters 12 an den Seitenwänden 6 beziehungsweise am Unterteil 3. Es ist darauf hinzuweisen, dass der Adapter 12 und somit auch die Klemme 11 lediglich an den Seitenwänden 6 des Unterteils 3 befestigt sind, nicht jedoch am Boden 5.

Die Klemme 11 und der Adapter 12 sind in Fig. 7 dargestellt. Die Klemme 11 weist eine Rückseite 19 sowie eine gegenüberliegende Vorderseite 17 auf. Mit der Rückseite 19 liegt die Klemme 11 im montierten Zustand am Adapter 12 an. Es sind Verbindungsmittel an der Klemme 11 und am Adapter 12 vorgesehen, um beide Teile miteinander zu verbinden. Hierbei handelt es sich im Ausführungsbeispiel um eine Rastverbindung. Die Klemme 11 wird einfach in den Adapter 12 eingeschoben. Beim Erreichen der Solllage schnappt ein Rasthaken 25 des Adapters 12 in eine entsprechende Ausnehmung der Klemme 11, so dass diese beiden Bauteile dann formschlüssig aneinandergehalten sind. Die Klemme 11 und der Adapter 12 können dann als Einheit verwendet werden, insbesondere an der Seitenwand 6 des Gehäuses 2 angeordnet werden.

Die Klemme 11 weist fünf Pole 13 auf. Die fünf Pole 13 sind elektrisch voneinander getrennt. Jeder Pol 13 weist zwei Anschlüsse 14, 15 auf. Die beiden Anschlüsse 14, 15 sind elektrisch leitend miteinander verbunden. In jeden der Anschlüsse 14, 15 kann eine Elektroleitung eingeführt werden. Die Anschlüsse 14, 15 können derart ausgebildet sein, dass mehrere Leitungen 14, 15 in ein und denselben Anschluss 14, 15 eingeführt werden können. Jeder Anschluss 14, 15 weist eine zugeordnete Arretierung 20 auf, mit welcher die jeweilige Elektroleitung am Anschluss 14, 15 festgelegt werden kann. Hierbei handelt es sich beispielsweise um eine Verschraubung.

Zwischen benachbarten Polen 13 weist die Klemme 11 jeweils eine Trennwand 18 auf. Die Trennwand 18 steht entgegen der Einschubrichtung 16 von der Vorderseite 17 der Klemme 11 vor. Die Trennwände 18 bilden eine Art Einführkanal für Elektroleitungen. Durch die Trennwände 18 kann sichergestellt werden, dass eine Elektroleitung nicht versehentlich abrutscht und dadurch in einen falschen Anschluss der Klemme 11 gerät.

Insbesondere der Darstellung gemäß Fig. 4 kann entnommen werden, dass der zur Verfügung stehende Montageraum im Inneren des Gehäuses 2 vergleichsweise groß ist, verglichen mit beispielsweise einer mittigen beziehungsweise zentralen Anordnung der Klemme 11 im Unterteil 3. Hinzu kommt, dass die Klemme 11 nicht auf den Boden 5 des Unterteils 3, sondern vielmehr an einer Seitenwand 6 befestigt ist. Zwischen der Unterseite der Klemme 11 und dem Boden 5 des Unterteils 3 verbleibt im endmontierten Zustand ein Spalt. Die Klemme 11 ist also vergleichsweise hoch angeordnet. Dies verbessert ebenfalls die Zugänglichkeit der Anschlüsse 14, 15 und damit insgesamt die Handhabung.

Im Unterteil 3 ist eine Vielzahl von Verbindungsmitteln 24 für den Adapter 12 vorgesehen. In jeder Ecke des Unterteils 3, das heißt jeweils im Bereich des Aufeinandertreffens zweier Seitenwände 6, ist ein entsprechendes Verbindungsmittel 24 vorgesehen. Der Adapter 12 mit der Klemme 11 kann daher wahlweise an jeder der vier Seitenwände 6 des Unterteils 3 angeordnet werden. Der Adapter 12 mit der Klemme 11 ist zudem zerstörungsfrei lösbar im Unterteil 3 angeordnet. Das heißt durch entsprechendes Lösen des Verbindungsmittels 23 kann der Adapter 12 nach erfolgter Montage wieder entnommen werden.

Die Anordnung der Klemme 11 an der Seitenwand 6 einerseits und die oval geformte Außenfläche des Deckels 4 und/oder des Unterteils 3 müssen nicht zwingend miteinander kombiniert vorliegen.

### Bezugszeichenliste

- 1: Abzweigkasten
- 2: Gehäuse
- 3: Unterteil
- 4: Deckel
- 5: Boden
- 6: Seitenwand
- 7: Bein
- 8: Oberseite
- 9: Befestigungsmittel
- 10: Kragen
- 11: Klemme
- 12: Adapter
- 13: Pol
- 14: Anschluss
- 15: Anschluss
- 16: Einschubrichtung
- 17: Vorderseite
- 18: Trennwand
- 19: Rückseite
- 20: Arretierung
- 21: Befestigungsmittel
- 23: Verbindungsmittel
- 24: Verbindungsmittel
- 25: Rasthaken

## Patentansprüche

1. Abzweigkasten (1) für die Installation von Elektrokabeln, mit einem Gehäuse (2) und einer Klemme (11) zum Anschluss von Elektroleitungen, wobei die Klemme (11) lösbar an einer Befestigungsleiste im Bereich einer Seitenwand (6) des Gehäuses (2) angeordnet ist, wobei nicht die Klemme (11) selbst, sondern nur die Befestigungsleiste unmittelbar mit dem Gehäuse (2) verbunden ist, wobei die Befestigungsleiste als lösbar im Gehäuse (2) angeordneter Adapter (12) ausgebildet ist.

2. Abzweigkasten (1) nach Anspruch 1, **dadurch gekennzeichnet, dass** die Klemme (11) formschlüssig, insbesondere durch eine Rastverbindung, mit der Befestigungsleiste verbunden ist.

3. Abzweigkasten (1) nach einem der vorangehenden Ansprüche, **dadurch gekennzeichnet, dass** die Befestigungsleiste und/oder die Klemme (11) von einem Boden (5) des Gehäuses (2) beabstandet angeordnet ist.

4. Abzweigkasten (1) nach einem der vorangehenden Ansprüche, **dadurch gekennzeichnet, dass** die Befestigungsleiste im Bereich der Ecken des Gehäuses mit demselben verbunden ist.

5. Abzweigkasten (1) nach einem der vorangehenden Ansprüche, **dadurch gekennzeichnet, dass** die Klemme (11) mit einer Rückseite (19) an der Befestigungsleiste angeordnet ist.

6. Abzweigkasten (1) nach einem der vorangehenden Ansprüche, **dadurch gekennzeichnet, dass** eine Vielzahl von unterschiedlichen Klemmen (11) vorgesehen ist, welche nach dem Baukastenprinzip mit der Befestigungsleiste kombinierbar ausgebildet sind.

7. Abzweigkasten (1) nach Anspruch 1, **dadurch gekennzeichnet, dass** der Adapter (12) mit dem Gehäuse (2) formschlüssig verbindbar, insbesondere verschraubbar ist.

8. Abzweigkasten (1) nach einem der Ansprüche 1 oder 7, **dadurch gekennzeichnet, dass** das Gehäuse (2) eine Vielzahl von vorgegebenen Positionen für den Adapter (12) aufweist, wobei der Adapter (12) wahlweise an einer der Positionen anordbar ist.

9. Abzweigkasten (1) nach Anspruch 8, **dadurch gekennzeichnet, dass** die vorgegebenen Positionen für den Adapter (12) im Bereich der Ecken des Gehäuses ausgebildet sind.

10. Abzweigkasten (1) nach einem der vorangehenden Ansprüche, **dadurch gekennzeichnet, dass** die Klemme (11) mehrere Pole (13) aufweist, wobei jeder Pol (13) wenigstens zwei Anschlüsse (14, 15) aufweist, wobei die Anschlüsse (14, 15) eines Pols (13) eine gleiche Einschubrichtung aufweisen und an einer Vorderseite der Klemme (11) rechtwinklig zur Einschubrichtung nebeneinander angeordnet sind.

11. Abzweigkasten (1) nach Anspruch 10, **dadurch gekennzeichnet, dass** die Klemme (11) jeweils zwischen zwei Polen (13) eine Trennwand aufweist, welche entgegen der Einschubrichtung (16) über die Vorderseite (17) der Klemme (11) heraussteht.

12. Abzweigkasten (1) nach einem der vorangehenden Ansprüche, **dadurch gekennzeichnet, dass** die Klemme (11) als ein als Einheit handhabbares Bauteil ausgebildet ist.

## Claims

1. Junction box (1) for the installation of electrical cables, having a housing (2) and a terminal (11) for connecting electrical cables, the terminal (11) being arranged detachably on a fastening strip in the region of a side wall (6) of the housing (2), not the terminal (11) itself but only the fastening strip being connected directly to the housing (2), the fastening strip being designed as an adapter (12) arranged detachably in the housing (2).

2. Junction box (1) according to claim 1, **characterized in that** the terminal (11) is positively connected to the fastening strip, in particular by a latching connection.

3. Junction box (1) according to one of the preceding claims, **characterized in that** the fastening strip and/or the terminal (11) is arranged at a distance from a bottom (5) of the housing (2).

4. Junction box (1) according to one of the preceding claims, **characterized in that** the fastening strip is connected to the housing in the region of the corners thereof.

5. Junction box (1) according to one of the preceding claims, **characterized in that** the terminal (11) is arranged with a rear side (19) on the fastening strip.

6. Junction box (1) according to one of the preceding claims, **characterized in that** a plurality of different terminals (11) is provided, which are designed to be combinable with the fastening strip according to the modular principle.

7. Junction box (1) according to claim 1, **characterized in that** the adapter (12) can be positively connected, in particular screwed, to the housing (2).

8. Junction box (1) according to one of claims 1 to 7, **characterized in that** the housing (2) has a plurality of predetermined positions for the adapter (12), the adapter (12) being selectively arrangeable at one of the positions.

9. Junction box (1) according to claim 8, **characterized in that** the predetermined positions for the adapter (12) are formed in the region of the corners of the housing.

10. Junction box (1) according to one of the preceding claims, **characterized in that** the terminal (11) has a plurality of poles (13), each pole (13) having at least two connections (14, 15), the connections (14, 15) of one pole (13) having the same insertion direction and being arranged next to one another on a front side of the terminal (11) at right angles to the insertion direction.

11. Junction box (1) according to Claim 10, **characterized in that** the terminal (11) respectively has a partition wall between two poles (13), which partition wall projects beyond the front side (17) of the terminal (11) in the opposite direction to the insertion direction (16).

12. Junction box (1) according to one of the preceding claims, **characterized in that** the terminal (11) is designed as a component which can be handled as a unit.

## Revendications

1. Boîte de dérivation (1) pour l'installation de câbles électriques, comprenant un boîtier (2) et une borne (11) pour le raccordement de câbles électriques, la borne (11) étant disposée de manière amovible sur une bande de fixation dans la zone d'une paroi latérale (6) du boîtier (2), non pas la borne (11) elle-même mais seulement la bande de fixation étant reliée directement au boîtier (2), la bande de fixation étant conçue comme un adaptateur (12) agencé de manière amovible dans le boîtier (2).

2. Boîte de dérivation (1) selon la revendication 1, **caractérisée en ce que** la borne (11) est reliée positivement à la bande de fixation, en particulier par une liaison à verrouillage.

3. Boîte de dérivation (1) selon l'une des revendications précédentes, **caractérisée en ce que** la bande de fixation et/ou la borne (11) est disposée à distance d'un fond (5) du boîtier (2).

4. Boîte de dérivation (1) selon l'une des revendications précédentes, **caractérisée en ce que** la bande de fixation est reliée au boîtier dans la zone de ses angles.

5. Boîte de dérivation (1) selon l'une des revendications précédentes, **caractérisée en ce que** la borne (11) est disposée avec une face arrière (19) sur la bande de fixation.

6. Boîte de dérivation (1) selon l'une des revendications précédentes, **caractérisée en ce qu'**il est prévu une multiplicité de bornes différentes (11) qui sont conçues pour pouvoir être combinées avec la bande de fixation selon le principe modulaire.

7. Boîte de dérivation (1) selon la revendication 1, **caractérisée en ce que** l'adaptateur (12) peut être relié par complémentarité de forme, en particulier vissé, au boîtier (2).

8. Boîte de dérivation (1) selon l'une des revendications 1 à 7, **caractérisée en ce que** le boîtier (2) présente une pluralité de positions prédéterminées pour l'adaptateur (12), l'adaptateur (12) pouvant être disposé sélectivement dans une des positions.

9. Boîte de dérivation (1) selon la revendication 8, **caractérisée en ce que** les positions prédéterminées pour l'adaptateur (12) sont formées dans la zone des angles du boîtier.

10. Boîte de dérivation (1) selon l'une des revendications précédentes, **caractérisée en ce que** la borne (11) présente une pluralité de pôles (13), chaque pôle (13) présentant au moins deux connexions (14, 15), les connexions (14, 15) d'un pôle (13) présentant la même direction d'insertion et étant disposées l'une à côté de l'autre, à l'avant de la borne (11) à angle droit avec la direction d'insertion.

11. Boîte de dérivation (1) selon la revendication 10, **caractérisée en ce que** la borne (11) respectivement présente une paroi de séparation entre deux pôles (13), laquelle paroi de séparation dépasse de la face avant (17) de la borne (11) dans la direction opposée à celle de l'insertion (16).

12. Boîte de dérivation (1) selon l'une des revendications précédentes, **caractérisée en ce que** la borne (11) est conçue comme un composant qui peut être manipulé comme une unité.
